# EUROPEAN PATENT APPLICATION

(11) **EP 2 284 458 A1**
(43) Date of publication of application: **16.02.2011**
(21) Application number: 08741012.2
(22) Date of filing: 01.05.2008
(51) Int. Cl.: F25B 27/02, F01K 23/06, F01K 23/10, F01N 5/02, F02G 5/00, F02G 5/02

(54) **WASTE HEAT UTILIZATION DEVICE FOR INTERNAL COMBUSTION**

(71) Applicant: Sanden Corporation, Isesaki-shi Gunma 372-8502 (JP)
(72) Inventor: KASUYA, Junichiro, Isesaki-shi Gunma 372-8502 (JP); KANOU, Yasuaki, Isesaki-shi Gunma 372-8502 (JP)
(74) Representative: Prüfer & Partner GbR European Patent Attorneys
(86) International application number: PCT/JP2008/058384
(87) International publication number: WO 2009/133620

(57) **Abstract**

A waste heat utilization device (2) for an internal combustion engine (6) includes a heat medium circuit (8) through which a heat medium applied with waste heat from at least one of the engine and a heat source of the engine is circulated as the engine is operated, and a Rankine cycle circuit (4) through which a working fluid is circulated. The Rankine cycle circuit includes a heating unit (10, 12) for heating the working fluid by causing heat to transfer to the working fluid from at least one of the heat medium and the heat source, an expander (14) for expanding the working fluid introduced therein from the heating unit to produce driving force, and a condenser (16) for condensing the working fluid introduced therein from the expander. The working fluid is delivered from the condenser to the heating unit. The flow rate of at least one of the heat medium and the heat source that transfer heat to the working fluid in the heating unit is controlled in accordance with an operating condition of the engine.

## Description

### Technical Field

The present invention relates to waste heat utilization devices for internal combustion engines, and more particularly, to a waste heat utilization device suited for use with an internal combustion engine mounted on a motor vehicle.

### Background Art

For such waste heat utilization devices for internal combustion engines, techniques have been known in which, in an internal combustion engine of a motor vehicle, for example, a Rankine cycle circuit is constituted by using component parts of a refrigeration cycle to recover waste heat of the engine as kinetic energy so that the recovered kinetic energy may be used to assist the shaft output of the engine.

Specifically, a cooling water circuit has been known wherein a radiator is inserted in the cooling water circuit of an engine and is connected in series with an evaporator of the refrigeration circuit to efficiently cool the cooling water (cf. Patent Document 1: Japanese Patent No. 2540738).

Also, a Rankine cycle circuit has been known in which the cooling water circuit is provided with an exhaust gas heat exchanger for additionally heating, by the heat of the exhaust gas, the cooling water that has been used to cool the engine, and the cooling water thus heated by the exhaust gas heat exchanger is delivered to the evaporator to efficiently recover the waste heat of the engine (cf. Patent Document 2: Japanese Laid-open Patent Publication No. 57-99222).

In the cooling water circuit disclosed in Patent Document 1, however, if a large amount of cooling water is circulated through the cooling water circuit, the resistance of the evaporator to the flow of the cooling water can increase to an extent such that the circulation of the cooling water through the cooling water circuit is hindered, posing a problem that the cooling performance of the radiator lowers.

In the Rankine cycle circuit disclosed in Patent Document 2, on the other hand, since the cooling water is additionally heated by the exhaust gas, the heat capacity of the evaporator has to be increased in order to sufficiently absorb heat from the cooling water, that is, to cool the cooling water-to a cooling water temperature low enough to satisfactorily cool the engine body, giving rise to a problem that the size of the evaporator and of a condenser inevitably increases. As a consequence, the waste heat utilization device increases in size.

### Disclosure of the Invention

The present invention was created in view of the above circumstances, and an object thereof is to provide a waste heat utilization device for an internal combustion engine which device is reduced in size and weight and yet permits both of a cooling water circuit of the engine and a Rankine cycle circuit to function properly.

To achieve the object, the present invention provides a waste heat utilization device for an internal combustion engine, comprising: a heat medium circuit through which a heat medium applied with waste heat from at least one of the engine and a heat source of the engine is circulated as the engine is operated; and a Rankine cycle circuit through which a working fluid is circulated, the Rankine cycle circuit including a heating unit for heating the working fluid by causing heat to transfer to the working fluid from at least one of the heat medium and the heat source, an expander for expanding the working fluid introduced therein from the heating unit to produce driving force, and a condenser for condensing the working fluid introduced therein from the expander, the working fluid being delivered from the condenser to the heating unit, wherein a flow rate of at least one of the heat medium and the heat source that transfer heat to the working fluid in the heating unit is restricted in accordance with an operating condition of the engine.

In the waste heat utilization device, when the flow rate of the heat medium circulated through the heat medium circuit increases due to increase in the output of the engine and consequent increase of the waste heat, the flow rate of the heat medium that transfers heat to the working fluid in the heating unit is restricted. It is therefore possible to prevent the circulation of the heat medium from being hindered by the resistance of the heating unit to the flow of the heat medium.

Also, by restricting the flow rate of at least one of the heat medium and the heat source that transfer heat to the working fluid in the heating unit, it is possible to restrict the amount of heat that the working fluid absorbs when the engine is operating with a maximum output. Accordingly, the heat capacity of the heating unit and of the condenser in the Rankine cycle circuit can be reduced. It is therefore possible to reduce the size and weight of the waste heat utilization device while at the same time ensuring proper functioning of both the heat medium circuit of the engine and the Rankine cycle circuit.

In the waste heat utilization device according to a preferred embodiment, the heat medium is cooling water for cooling the engine, and the heat medium circuit is a cooling water circuit which includes a radiator for cooling the cooling water and in which the cooling water is circulated successively through the engine, the heating unit and the radiator at a flow rate corresponding to the operating condition of the engine. In this case, the cooling water circuit further includes a bypass passage bypassing the heating unit, and flow rate proportioning control means for controlling distribution of the cooling water to the bypass passage and the heating unit, to restrict an amount of the cooling water flowing into the heating unit while maintaining circulation of the cooling water through the cooling water circuit.

With this configuration, when the flow rate of the cooling water circulated through the cooling water circuit increases, the increased amount of cooling water can be made to flow to the bypass passage, and not the heating unit, thereby preventing the circulation of cooling water from being hindered by the flow resistance of the heating unit.

In the waste heat utilization device according to a preferred embodiment, the flow rate proportioning control means includes a differential pressure sensor for detecting a differential pressure across the heating unit, and a manipulating unit which is driven so as to restrict the flow rate of the cooling water flowing into the heating unit in accordance with the differential pressure detected by the differential pressure sensor.

With this configuration, the resistance of the heating unit to the flow of the cooling water can be directly monitored in terms of the differential pressure. Accordingly, the control responsiveness of the flow rate proportioning control means improves, making it possible to cause both of the cooling water circuit and the Rankine cycle circuit to function properly and reliably.

In the waste heat utilization device according to a preferred embodiment, the heating unit includes an evaporator connected in series with the radiator as viewed in a flowing direction of the cooling water, for heating the working fluid by causing heat to transfer to the working fluid from the cooling water introduced therein via the engine. In this case, the flow rate proportioning control means further includes a cooling water temperature sensor for detecting temperature of the cooling water circulated through the cooling water circuit, and drives the manipulating unit so as to cause the cooling water delivered from the engine to flow only into the bypass passage when the temperature of the cooling water detected by the cooling water temperature sensor is lower than or equal to a preset temperature.

With this configuration, the cooling water can be prevented from being excessively cooled due to excessive use of heat by the Rankine cycle circuit. Especially at the start of the engine, the function of the Rankine cycle circuit is stopped. Accordingly, the engine can be quickly warmed up without being excessively cooled by the cooling water, thus preventing deterioration in the fuel efficiency of the engine and enabling both the cooling water circuit and the Rankine cycle circuit to always function properly.

In the waste heat utilization device according to a preferred embodiment, the heat source is an exhaust gas discharged from the engine through an exhaust pipe, the heating unit includes an exhaust gas heat exchanger arranged in the exhaust pipe, and the Rankine cycle circuit further includes a working fluid pump which is driven to circulate the working fluid.

The flow rate proportioning control means further includes a cooling water temperature sensor for detecting temperature of the cooling water circulated through the cooling water circuit, and when the temperature of the cooling water detected by the cooling water temperature sensor is lower than or equal to a preset temperature, the flow rate proportioning control means stops operation of the working fluid pump and drives the manipulating unit so as to cause the cooling water delivered from the engine to flow into the exhaust gas heat exchanger.

With the above configuration, at the start of the engine, the function of the Rankine cycle circuit is stopped so that heat may not be absorbed from the cooling water in the evaporator, and since all of the cooling water circuited through the cooling water circuit can be heated by the exhaust gas heat exchanger, the engine can be warmed up more quickly.

In the waste heat utilization device according to a preferred embodiment, the flow rate proportioning control means further includes a second bypass passage bypassing only the evaporator, and a second manipulating unit arranged in the second bypass passage to restrict the flow rate of the cooling water flowing into the evaporator in accordance with the temperature of the cooling water detected by the cooling water temperature sensor. When the temperature of the cooling water detected by the cooling water temperature sensor is lower than or equal to the preset temperature, the flow rate proportioning control means drives the first-mentioned manipulating unit and the second manipulating unit such that the cooling water delivered from the engine is introduced only into the exhaust gas heat exchanger.

With this configuration, it is possible to stop the absorption of heat from the cooling water in the evaporator at the start of the engine, without the need to stop the Rankine cycle circuit, and also all of the cooling water circulated through the cooling water circuit can be heated. Further, since the evaporator is bypassed, pressure loss in the cooling water circuit attributable to the evaporator does not occur, facilitating the circulation of the cooling water and making it possible to warm up the engine even more quickly.

In the waste heat utilization device according to a preferred embodiment, the manipulating unit is a linear three-way valve whose operating position is continuously variable in accordance with the differential pressure detected by the differential pressure sensor. Alternatively, the manipulating unit may be a linear pump which is driven in a continuously variable manner in accordance with the differential pressure detected by the differential pressure sensor.

With this configuration, the flow rate of the cooling water flowing into the heating unit can be finely controlled in accordance with the differential pressure detected by the differential pressure sensor over the entire variation range of the total flow rate of the cooling water. Accordingly, the accuracy of flow rate proportioning control for the cooling water distributed to the heating unit and the bypass passage improves, enabling the cooling water circuit and the Rankine cycle circuit to function even more properly.

In the waste heat utilization device according to a preferred embodiment, the heat medium is cooling water for cooling the engine, and the heat source is an exhaust gas discharged from the engine through an exhaust pipe. In this case, the heating unit includes an exhaust gas heat exchanger arranged in the exhaust pipe for heating, by the exhaust gas, the cooling water delivered from the engine, and an evaporator for heating the working fluid by causing heat to transfer to the working fluid from the cooling water delivered from the exhaust gas heat exchanger. Also, the heat medium circuit is a cooling water circuit in which the cooling water is circulated successively through the engine, the exhaust gas heat exchanger and the evaporator at a flow rate corresponding to the operating condition of the engine. Further, the cooling water circuit includes heat absorption control means for restricting an amount of heat absorption that the cooling water absorbs from the exhaust gas in the exhaust gas heat exchanger, in accordance with the operating condition of the engine.

With the above configuration, when the engine is operating with a maximum output and thus the need to cool the engine is highest, the cooling water can be made not to absorb heat from the heat source, making it possible to reduce the heat capacity of the evaporator and of the condenser in the Rankine cycle circuit. The Rankine cycle circuit including the evaporator and the condenser, and thus the waste heat utilization device can be reduced in size and weight while ensuring proper functioning of the cooling water circuit and the Rankine cycle circuit.

In the waste heat utilization device according to a preferred embodiment, the heat absorption control means includes a sensing unit for detecting the operating condition of the engine, and a manipulating unit for restricting the amount of heat absorption in accordance with a detection signal from the sensing unit. In this case, the Rankine cycle circuit further includes a working fluid pump which is driven to circulate the working fluid, and when the operating condition of the engine detected by the sensing unit indicates that the engine needs to be warmed up, the heat absorption control means stops operation of the working fluid pump and also drives the manipulating unit so as to increase the amount of heat absorption.

With this configuration, the function of the Rankine cycle circuit is stopped at the start of the engine, to stop absorption of heat from the cooling water in the evaporator, whereby the engine can be warmed up quickly.

In the waste heat utilization device according to a preferred embodiment, the cooling water circuit further includes an evaporator bypass passage bypassing the evaporator, and a thermostat arranged at a meeting point where the evaporator bypass passage joins a downstream side of the evaporator and causing the cooling water to pass through the evaporator when temperature of the cooling water at the meeting point is higher than or equal to a preset temperature. In this case, the sensing unit is a cooling water temperature sensor for detecting temperature of the cooling water circulated through the cooling water circuit, and when the temperature of the cooling water detected by the cooling water temperature sensor is higher than a second preset temperature which is higher than or equal to the preset temperature, the heat absorption control means drives the manipulating unit so as to decrease the amount of heat absorption.

With this configuration, when the amount of heat absorption from the cooling water needs to be decreased, the control by the heat absorption control means is executed preferentially over the control by the thermostatic selector valve in order to avoid interference, whereby the heat absorption control means can be made to function with higher reliability.

In the waste heat utilization device according to a preferred embodiment, the sensing unit is an exhaust gas temperature sensor for detecting temperature of the exhaust gas, and when the temperature of the exhaust gas detected by the exhaust gas temperature sensor is higher than a third preset temperature, the heat absorption control means drives the manipulating unit so as to decrease the amount of heat absorption.

With this configuration, the responsiveness of the heat absorption control can be greatly improved, compared with the case where the manipulating unit is driven in accordance with the detected cooling water temperature.

In the waste heat utilization device according to a preferred embodiment, the cooling water circuit further includes an exhaust gas heat exchanger bypass passage bypassing the exhaust gas heat exchanger. In this case, the manipulating unit is a linear three-way valve which is driven in a continuously variable manner in accordance with a signal from the sensing unit, and the three-way valve controls distribution of the cooling water introduced therein via the engine to the exhaust gas heat exchanger bypass passage and the exhaust gas heat exchanger, to restrict an amount of the cooling water flowing into the exhaust gas heat exchanger.

With this configuration, when the flow rate of the cooling water circulated through the cooling water circuit increases, the increased amount of cooling water can be made to flow into the exhaust gas heat exchanger bypass passage, and not the exhaust gas heat exchanger, while properly controlling the amount of heat absorption by the cooling water so as to match the heat capacity of the Rankine cycle circuit, whereby the circulation of the cooling water can be prevented from being hindered by the resistance of the exhaust gas heat exchanger to the flow of the cooling water. It is therefore possible to maintain the engine cooling performance while executing the heat absorption control by the heat absorption control means.

In the waste heat utilization device according to a preferred embodiment, the manipulating unit is a linear damper which is driven in a continuously variable manner in accordance with a signal from the sensing unit, and the damper controls distribution of the exhaust gas to an exchanger-side passage in the exhaust pipe in which the exhaust gas heat exchanger is located and an exchanger-bypassing passage in the exhaust pipe which bypasses the exhaust gas heat exchanger, to restrict an amount of the exhaust gas from which heat is transferred to the cooling water in the exhaust gas heat exchanger.

With this configuration, the amount of heat absorption by the cooling water can be more accurately and quickly controlled so as to match the heat capacity of the Rankine cycle circuit, so that the accuracy and responsiveness of the heat absorption control means can be significantly improved.

### Brief Description of the Drawings

FIG. 1 is a schematic diagram illustrating a waste heat utilization device for an internal combustion engine according to a first embodiment of the present invention;
FIG. 2 is a flowchart illustrating a temperature-based valve opening control routine executed by an ECU appearing in FIG. 1;
FIG. 3 is a flowchart illustrating a differential pressure-based valve opening control routine executed by the ECU in FIG. 1;
FIG. 4 is a schematic diagram illustrating a waste heat utilization device for an internal combustion engine according to a second embodiment of the present invention;
FIG. 5 is a schematic diagram illustrating a waste heat utilization device for an internal combustion engine according to a third embodiment of the present invention;
FIG. 6 is a schematic diagram illustrating a waste heat utilization device for an internal combustion engine according to a fourth embodiment of the present invention;
FIG. 7 is a flowchart illustrating a temperature-based valve opening control routine executed by an ECU appearing in FIG. 6;
FIG. 8 is a flowchart illustrating a differential pressure-based valve opening control routine executed by the ECU in FIG. 6;
FIG. 9 is a schematic diagram illustrating a waste heat utilization device for an internal combustion engine according to a fifth embodiment of the present invention;
FIG. 10 is a schematic diagram illustrating a waste heat utilization device for an internal combustion engine according to a sixth embodiment of the present invention;
FIG. 11 is a flowchart illustrating a temperature-based valve opening control routine executed by an ECU appearing in FIG. 10;
FIG. 12 is a schematic diagram illustrating a waste heat utilization device for an internal combustion engine according to a seventh embodiment of the present invention;
FIG. 13 is a flowchart illustrating an engine warm-up control routine executed by an ECU appearing in FIG. 12;
FIG. 14 is a flowchart illustrating a heat absorption control routine executed by the ECU in FIG. 12;
FIG. 15 is a schematic diagram illustrating a waste heat utilization device for an internal combustion engine according to an eighth embodiment of the present invention;
FIG. 16 is a flowchart illustrating an engine warm-up control routine executed by an ECU appearing in FIG. 15; and
FIG. 17 is a flowchart illustrating a heat absorption control routine executed by the ECU in FIG. 15.

### Best Mode of Carrying out the Invention

Referring to the accompanying drawings, a first embodiment of the present invention will be described first.

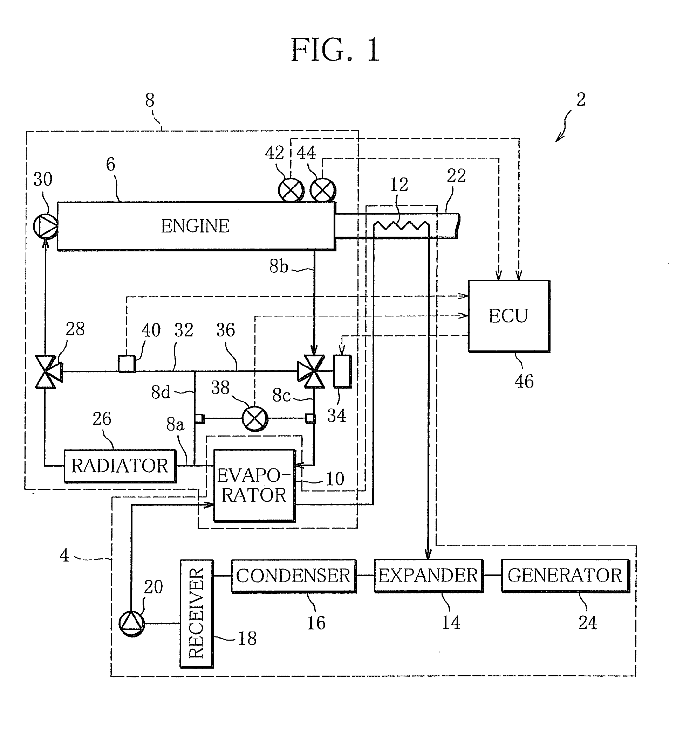

FIG. 1 schematically illustrates the configuration of a waste heat utilization device 2 for an internal combustion engine according to the first embodiment. The waste heat utilization device 2 comprises a Rankine cycle circuit 4 through which a refrigerant as a working fluid is circulated, and a cooling water circuit (heat medium circuit) 8 through which is circulated cooling water (heat medium) for cooling an engine (internal combustion engine) 6 of a motor vehicle, for example.

The Rankine cycle circuit 4 is a closed circuit which includes an evaporator (heating unit) 10, an exhaust gas heat exchanger (heating unit) 12, an expander 14, a condenser 16, a receiver 18 and a refrigerant pump (working fluid pump) 20 successively inserted in a circulation path for the refrigerant in the mentioned order as viewed in the flowing direction of the refrigerant.

The evaporator 10, which is a heat exchanger, heats the refrigerant by allowing heat to transfer from the cooling water circulated through the cooling water circuit 8 to the refrigerant circulated through the Rankine cycle circuit 4.

The exhaust gas heat exchanger 12 is arranged in an exhaust pipe 22 into which an exhaust gas (heat source) is discharged from the engine 6, to additionally heat, by the exhaust gas flowing through the exhaust pipe 22, the refrigerant that has been heated by the cooling water in the evaporator 10.

The expander 14 is a fluid machine for producing a rotative driving force by expanding the refrigerant which has been heated by the evaporator 10 and the exhaust gas heat exchanger 12 into a superheated vapor state. Also, the expander 14 is connected with an electric generator 24, which converts the rotative driving force produced by the expander 14 to electric power so that the electric power may be used by devices external to the waste heat utilization device 2.

The condenser 16 is a heat exchanger for transferring heat from the refrigerant discharged from the expander 14 to outside air to condense the refrigerant into a liquid phase. The receiver 18 separates the refrigerant condensed by the condenser 16 into two, gas and liquid phases and delivers only the separated liquid-phase refrigerant to the pump 20. The pump 20 feeds the liquid-phase refrigerant under pressure to the evaporator 10.

On the other hand, the cooling water circuit 8 includes a radiator 26, a thermostat 28 and a water pump 30 which are inserted in a cooling water circulation path extending from the engine 6, in the mentioned order as viewed in the flowing direction of the cooling water.

The radiator 26 is connected in series with the evaporator 10 and transfers heat from the cooling water discharged from the evaporator 10 to the outside air to further cool the cooling water.

The thermostat 28 is a mechanical selector valve capable of allowing the cooling water to pass either through the radiator 26 or a bypass passage 32 bypassing the radiator 26, depending on the temperature of the cooling water. The bypass passage 32 branches off from a passage 8a of the circulation path connecting between the evaporator 10 and the radiator 26, bypasses the radiator 26 and is connected to one inlet port of the thermostat 28. Thus, the thermostat 28 controls the flow rate of the cooling water passed through the radiator 26 in accordance with the cooling water temperature, to keep the temperature of the body of the engine 6 nearly constant, thereby preventing overheating of the engine 6.

The pump 30 is mounted to the engine 6 and operates in accordance with the rotating speed of the engine 6 so that the cooling water may be appropriately circulated through the cooling water circuit 8.

In this embodiment, a linear three-way valve (manipulating unit; three-way valve) 34 is inserted in the circulation path between the engine 6 and the evaporator 10. The three-way valve 34 is an electric motor-operated valve having a driving section applied with an input signal, and a single valve element driven in a continuously variable manner in proportion to the input signal to distribute the cooling water introduced into one inlet port to two output ports. The three-way valve is capable of finely adjusting the flow rates of the cooling water distributed to the respective outlet ports.

Specifically, the inlet port of the three-way valve 34 is connected with a passage 8b of the cooling water circuit 8 extending from the engine 6. One of the outlet ports is connected to a bypass passage 36 bypassing the evaporator 10 and communicating with the downstream side of the evaporator 10, and the other outlet port is connected to a passage 8c extending to the evaporator 10.

Also, the three-way valve 34 has such a structure as not to constitute a large pressure loss element within the whole cooling water circuit 8. The cooling water introduced from the passage 8b is distributed to the bypass passage 36 and the passage 8c by the three-way valve 34.

Part of the bypass passage 36 is shared by the bypass passage 32 bypassing the radiator 26. A cooling water pressure in this shared passage 8d and that in the passage 8c are introduced and input to a differential pressure sensor 38, which detects a differential pressure ΔP across the evaporator 10.

The engine 6 is mounted with various other sensors including a temperature sensor 40 attached to the bypass passage 32 to detect the cooling water temperature T, an engine temperature sensor 42 for directly detecting the temperature Te of the body of the engine 6, and a rotating speed sensor 44 for detecting the rotating speed of the engine 6.

The sensors 38, 40, 42 and 44 serving as sensing units and the three-way valve 34 serving as a manipulating unit are electrically connected to an electronic control unit (ECU) 46 for performing overall control of the vehicle including the waste heat utilization device 2. Based on detection signals input from the differential pressure sensor 38 and the temperature sensor 40, the ECU 46 outputs a signal to the three-way valve 34 to control the openings of the outlet ports to desired openings.

Specifically, in accordance with the differential pressure ΔP across the evaporator 10, detected by the differential pressure sensor 38, differential pressure-based valve opening control for driving the three-way valve 34 is executed as a sub control routine. This sub control routine is executed under the control of temperature-based valve opening control as a main control routine whereby the initiation and termination of the differential pressure-based valve opening control are controlled in accordance with the cooling water temperature T detected by the temperature sensor 40. The main and sub control routines are executed by the ECU 46 (flow rate proportioning control means).

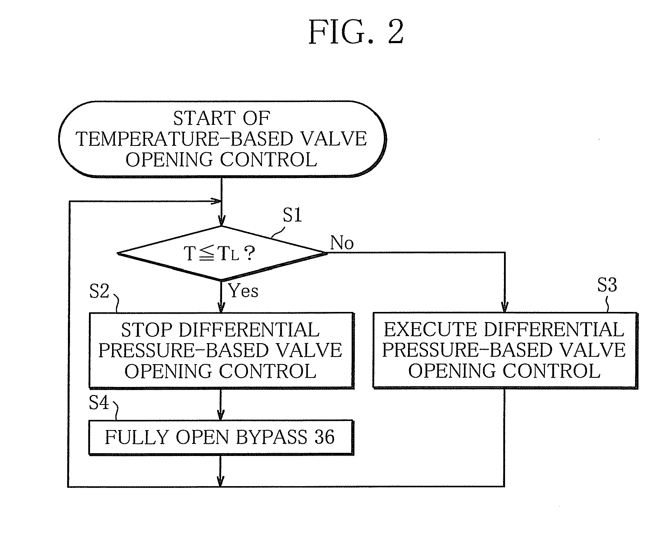

Referring now to the flowchart of FIG. 2, the temperature-based valve opening control will be explained.

Upon start of the temperature-based valve opening control, the control routine proceeds to S1 ("S" represents "Step", and this applies to the following description as well).

In S1, it is determined whether or not the cooling water temperature T detected by the temperature sensor 40 indicates a value lower than or equal to a preset temperature T_{L}. If the result of the decision is affirmative (Yes), that is, if it is judged that the cooling water temperature T is lower than or equal to the preset temperature T_{L}, the control routine proceeds to S2. On the other hand, if the result of the decision is negative (No), that is, if it is judged that the cooling water temperature T is higher than the preset temperature T_{L}, the control routine proceeds to S3.

In S2, the differential pressure-based valve opening control is terminated if it is under execution, and then the control routine proceeds to S4.

In S4, the three-way valve 34 is forcibly driven so that the bypass passage 36 may be fully open while the passage 8c totally closed, whereupon the control routine returns.

In S3, on the other hand, the differential pressure-based valve opening control is executed, whereupon the control routine returns.

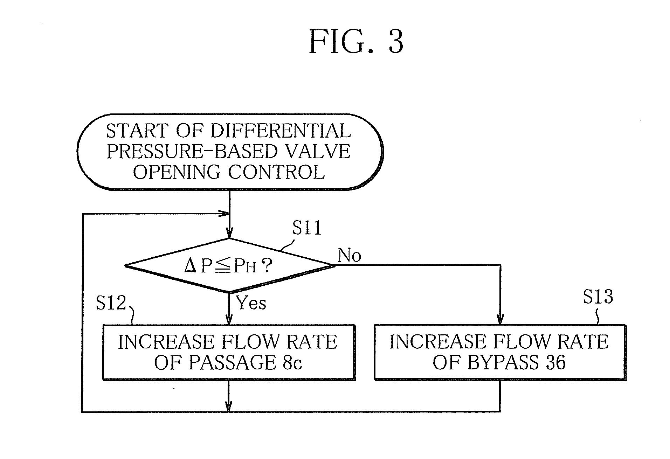

Referring now to the flowchart of FIG. 3, the differential pressure-based valve opening control executed in S3 will be described.

Upon start of the differential pressure-based valve opening control, the control routine first proceeds to S11.

In S11, it is determined whether or not the differential pressure ΔP detected by the differential pressure sensor 38 indicates a value lower than or equal to a preset differential pressure AP_{H}. If the result of the decision is affirmative (Yes), that is, if it is judged that the differential pressure ΔP is lower than or equal to the preset differential pressure ΔP_{H}, the control routine proceeds to S12. On the other hand, if the result of the decision is negative (No), that is, if it is judged that the differential pressure ΔP is higher than the preset differential pressure ΔP_{H}, the control routine proceeds to S13.

In S12, the three-way valve 34 is driven so as to increase the flow rate of the cooling water distributed to the passage 8c and decrease the flow rate of the cooling water distributed to the bypass passage 36, whereupon the control routine returns.

On the other hand, in S13, the three-way valve 34 is driven so as to increase the flow rate of the bypass passage 36 and decrease the flow rate of the passage 8c, whereupon the control routine returns.

According to this embodiment, the differential pressure-based valve opening control is executed in the aforementioned manner, whereby the flow rate Fe of the cooling water distributed to the evaporator can be restricted to a fixed rate or below even in cases where the total flow rate Ft of cooling water fluctuates due to change in the operating condition of the engine 6. It is therefore possible to prevent the circulation of the cooling water through the cooling water circuit 8 from being hindered by the resistance of the evaporator 10 to the flow of the cooling water, so that the cooling performance of the radiator 26 can be maintained.

By monitoring the differential pressure ΔP across the evaporator 10, moreover, it is possible to directly detect a substantially large differential pressure ΔP caused, for example, by the deposition of scale inside the evaporator 10. The cooling water circuit 8 and the Rankine cycle circuit 4 can therefore be made to function properly and reliably.

Also, since the three-way valve 34 is used as a manipulating unit, the cooling water distribution can be continuously controlled over the entire fluctuation range of the total flow rate Ft of the cooling water. Accordingly, the accuracy of the differential pressure-based valve opening control improves, with the result that the cooling water circuit 8 and the Rankine cycle circuit 4 can be made to function more properly.

Further, by executing the temperature-based valve opening control, it is possible to control the cooling water distribution such that, when the cooling water temperature T is low, the total flow rate of cooling water is equal to the bypass passage-side flow rate, namely, Ft = Fb, or in other words, the evaporator-side flow rate is equal to zero, namely, Fe = 0. The cooling water can therefore be prevented from being excessively cooled due to excessive use of heat by the Rankine cycle circuit 4, so that fuel can be satisfactorily atomized in the engine 6, making to possible to improve the output and fuel efficiency of the engine 6.

In particular, the function of the Rankine cycle circuit 4 can be stopped at the start of the engine 6 during which the cooling water temperature T is low. Thus, the engine 6 is prevented from being excessively cooled by the cooling water and can be quickly warmed up, making it possible to minimize deterioration in the fuel efficiency at the start of the engine 6. Accordingly, both of the cooling water circuit 8 and the Rankine cycle circuit 4 can be made to properly function in accordance with the operating condition of the engine 6 only at suitable times in appropriate environments.

A second embodiment will be now described.

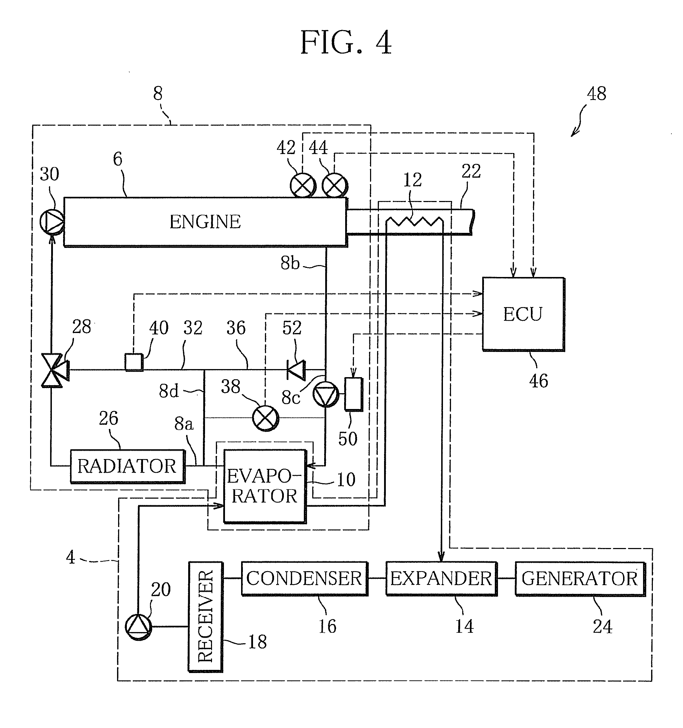

As shown in FIG. 4, a waste heat utilization device 48 according to the second embodiment uses a linear electric motor-driven pump (manipulating unit; pump) 50 as the manipulating unit, instead of the three-way valve 34, and a check valve 52 is inserted in the bypass passage 36. In the other respects, the configuration of the second embodiment is substantially identical with that of the first embodiment.

The linear electric motor-driven pump 50 is arranged in the passage 8c and is driven such that a rotating speed thereof is continuously variable in proportion to the differential pressure ΔP detected by the differential pressure sensor 38. Namely, in the second embodiment, when the differential pressure ΔP detected by the differential pressure sensor 38 is judged to be lower than or equal to the preset differential pressure value ΔP_{H}, the rotating speed of the pump 50 is increased, as distinct from the differential pressure-based valve opening control of the first embodiment. On the other hand, when the differential pressure ΔP is judged to be higher than the preset differential pressure value ΔP_{H}, the rotating speed of the pump 50 is decreased. That is to say, differential pressure-based rotating speed control is executed.

Like the first embodiment, the differential pressure-based rotating speed control is terminated when the cooling water temperature T detected by the temperature sensor 40 is judged to be lower than or equal to the preset temperature T_{L}, and is executed when the cooling water temperature T is judged to be higher than the preset temperature T_{L}. Thus, the differential pressure-based rotating speed control is executed under the control of temperature-based rotating speed control (flow rate proportioning control means).

In this manner, also in the second embodiment, the cooling water can be prevented from being excessively cooled due to excessive use of heat by the Rankine cycle circuit 4, as in the first embodiment, whereby both of the cooling water circuit 8 and the Rankine cycle circuit 4 can be made to function properly and reliably.

Especially in the second embodiment, the pump 50 is used as the manipulating unit, and accordingly, a large amount of cooling water can be introduced into the evaporator 10 by making use of the driving pressure of the pump 50. Also, since the check valve 52 is arranged in the bypass passage 36, the backflow of the cooling water from the bypass passage 36 can be appropriately prevented. It is therefore possible to improve the responsiveness and efficiency of the Rankine cycle circuit 4, and as a consequence, the cooling water circuit 8 and the Rankine cycle circuit 4 can be made to function even more properly.

A third embodiment will be now described.

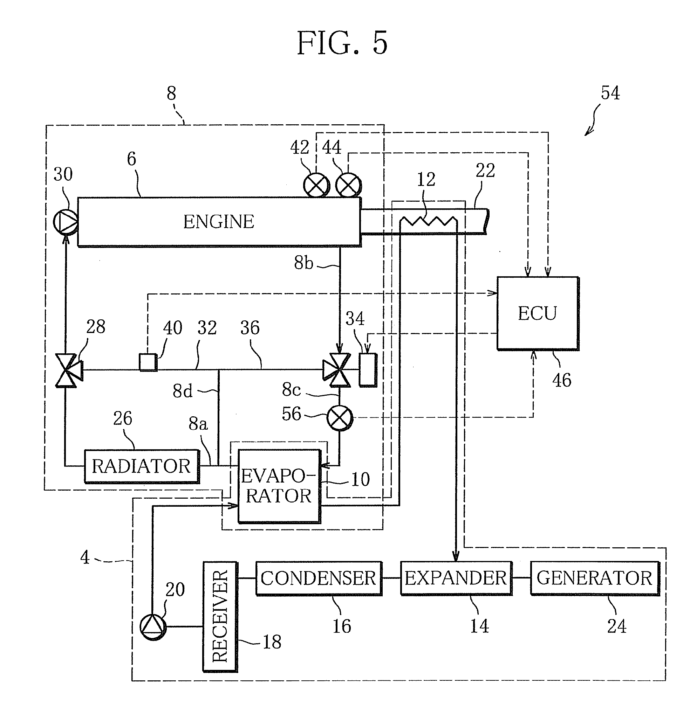

As shown in FIG. 5, a waste heat utilization device 54 according to the third embodiment uses a flow sensor 56 as the sensing unit, instead of the differential pressure sensor 38 of the first embodiment. In the other respects, the configuration of the third embodiment is substantially identical with that of the first embodiment.

The flow sensor 56 is arranged in the passage 8c, and the three-way valve 34 is driven such that an opening thereof is proportional to the flow rate F of cooling water detected by the flow sensor 56. Specifically, in the third embodiment, when the cooling water flow rate F detected by the flow sensor 56 is judged to be lower than or equal to a preset flow rate F_{H}, the three-way valve 34 is driven so as to increase the flow rate of the passage 8c and decrease the flow rate of the bypass passage 36, as distinct from the differential pressure-based valve opening control of the first embodiment and the differential pressure-based rotating speed control of the second embodiment. On the other hand, when the flow rate F is judged to be higher than the preset flow rate F_{H}, the three-way valve 34 is driven so as to increase the flow rate of the bypass passage 36 and decrease the flow rate of the passage 8c. That is to say, flow rate-based valve opening control is executed.

Also, like the first and second embodiments, the flow rate-based valve opening control is executed and terminated in accordance with the relationship between the cooling water temperature T detected by the temperature sensor 40 and the preset temperature T_{L}. Thus, the flow rate-based valve opening control is executed under the control of the temperature-based valve opening control (flow rate proportioning control means).

In this manner, also in the third embodiment, the cooling water can be prevented from being excessively cooled due to excessive use of heat by the Rankine cycle circuit 4, as in the first and second embodiments, whereby both of the cooling water circuit 8 and the Rankine cycle circuit 4 can be made to function properly and reliably.

Especially in the third embodiment, the flow sensor 56 is used as the sensing unit. Thus, the evaporator-side flow rate Fe can be kept constant with higher accuracy, and since the controllability of the cooling water circuit 8 and of the Rankine cycle circuit 4 improves, the circuits 4 and 8 can be made to function optimally.

A fourth embodiment will be now described.

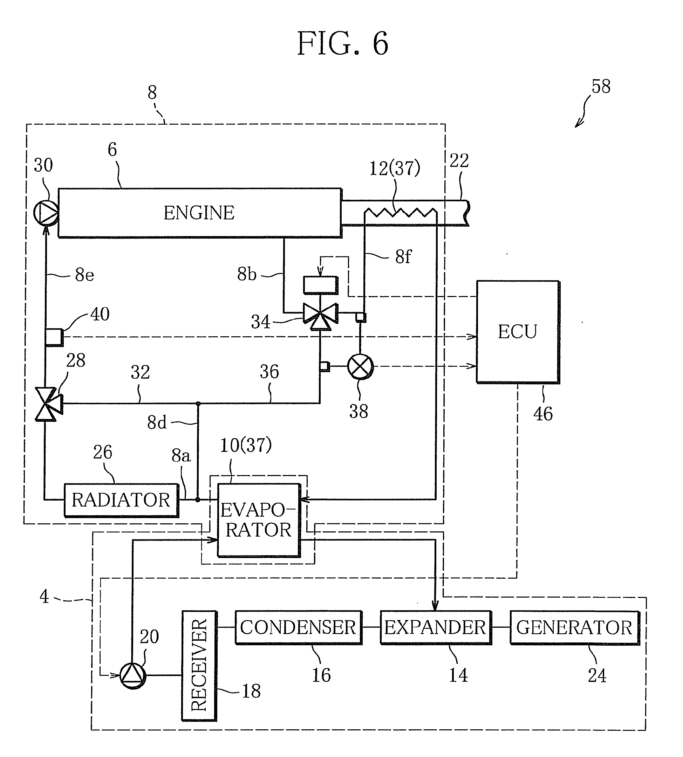

As shown in FIG. 6, in a waste heat utilization device 58 of the fourth embodiment, the exhaust gas heat exchanger 12, which is provided in the Rankine cycle circuit 4 in the first embodiment, is incorporated into the cooling water circuit 8. Thus, the cooling water heated by the engine 6 is further heated by the exhaust gas heat exchanger 12.

Also, the three-way valve 34 is connected such that in accordance with a differential pressure ΔP which is the pressure difference across a heating unit 37 constituted by the evaporator 10 and the exhaust gas heat exchanger 12 and which is detected by the differential pressure sensor 38, the cooling water is caused to bypass the heating unit 37.

Further, the temperature sensor 40 is arranged in that passage 8e in the circulation path of the cooling water circuit 8 which extends from the thermostat 28 to the engine 6, and the exhaust gas heat exchanger 12 is connected with one outlet port of the three-way valve 34 through a passage 8f constituting the circulation path of the cooling water circuit 8. In the other respects, the configuration of the fourth embodiment is substantially identical with that of the first embodiment.

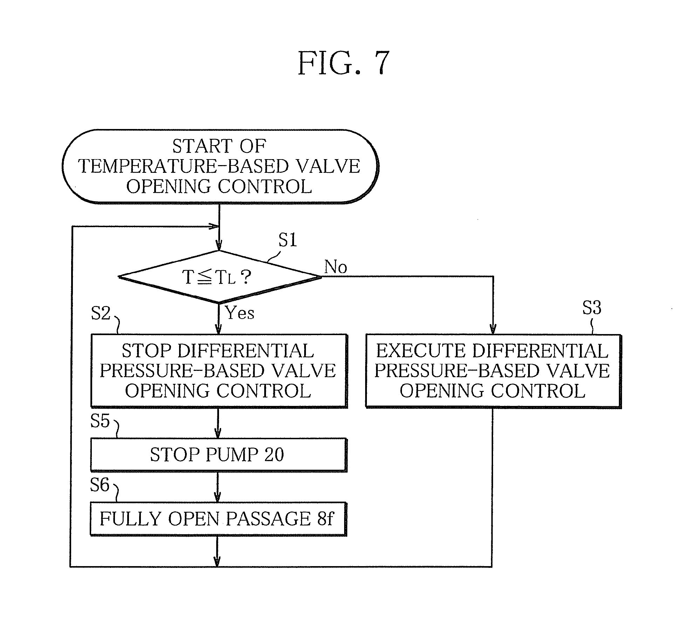

In this embodiment, temperature-based valve opening control is executed as shown in the flowchart of FIG. 7. Specifically, when differential pressure-based valve opening control is terminated in S2, the control routine proceeds to S5. In S5, the pump 20 is stopped, and then in S6, the three-way valve 34 is driven so that the passage 8f may be fully open. In the other respects, the temperature-based valve opening control of this embodiment is identical with that of the first embodiment.

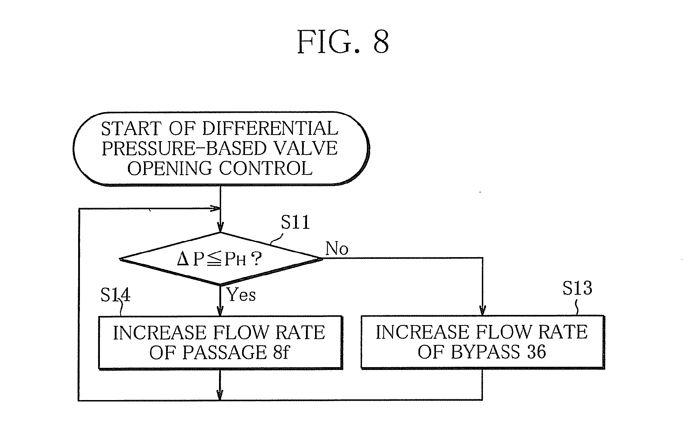

The differential pressure-based valve opening control of this embodiment is executed as shown in the flowchart of FIG. 8. If it is judged in S11 that the differential pressure ΔP is lower than or equal to the preset differential pressure ΔP_{H}, the control routine proceeds to S14 in which the three-way valve 34 is driven so as to increase the flow rate of the passage 8f. In S13, on the other hand, the flow rate of the bypass passage 36 bypassing the heating unit 37 is increased. In the other respects, the differential pressure-based valve opening control is executed in the same manner as in the first embodiment (flow rate proportioning control means).

Thus, also in the fourth embodiment, it is possible to prevent the circulation of the cooling water through the cooling water circuit 8 from being hindered by the resistance of the heating unit 37 to the flow of the cooling water, as in the foregoing embodiments, whereby the cooling performance of the radiator 26 can be maintained.

Especially, in the temperature-based valve opening control executed in the fourth embodiment, when the cooling water temperature T is lower than or equal to the preset temperature T_{L}, the differential pressure-based valve opening control is terminated and then the operation of the pump 20 of the Rankine cycle circuit 4 is stopped. At the start of the engine 6, therefore, the function of the Rankine cycle circuit 4 is stopped without fail so that heat may not be absorbed from the cooling water, and at the same time the cooling water is introduced at the maximum flow rate Ft into the exhaust gas heat exchanger 12 so that the cooling water may be heated. Since the engine 6 can be warmed up more quickly as a result, the fuel efficiency can be further improved at the start of the engine 6, and also both of the cooling water circuit 8 and the Rankine cycle circuit 4 can be made to function properly.

A fifth embodiment will be now described.

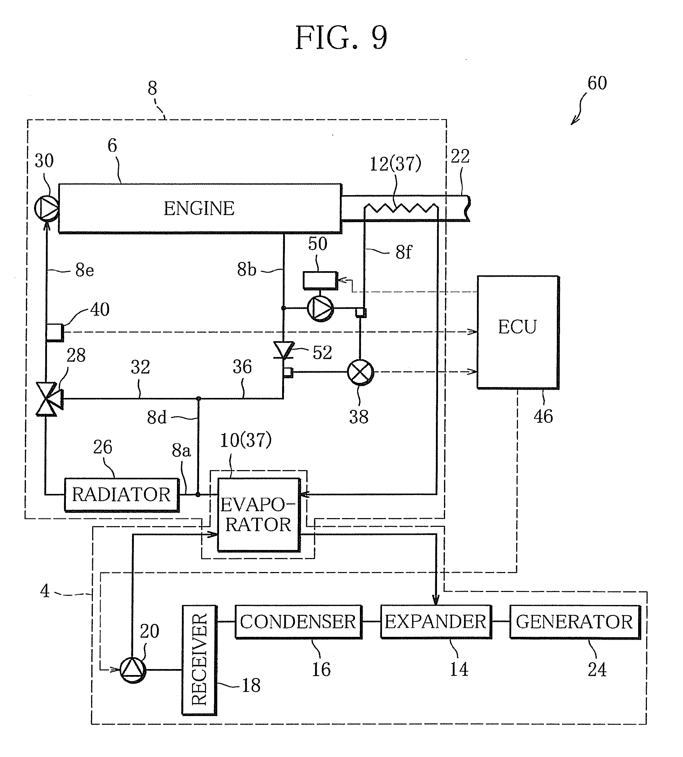

As shown in FIG. 9, a waste heat utilization device 60 according to the fifth embodiment uses the linear pump (manipulating unit; pump) 50 as the manipulating unit, instead of the three-way valve 34, and executes the temperature-based rotating speed control as well as the differential pressure-based rotating speed control, as in the second embodiment. Also, the check valve 52 is arranged in the bypass passage 36. In the other respects, the configuration of this embodiment is substantially identical with that of the fourth embodiment.

Also in the waste heat utilization device 60 of the fifth embodiment, the cooling performance of the radiator 26 can be maintained irrespective of change in the operating condition of the engine 6, like the fourth embodiment, whereby the engine 6 can be quickly warmed up, making it possible to cause both of the cooling water circuit 8 and the Rankine cycle circuit 4 to function properly.

Especially in the fifth embodiment, since the pump 50 is used as the manipulating unit as in the second embodiment, a large amount of cooling water can be introduced to the heating unit 37 by utilizing the driving pressure of the pump 50. Also, the check valve 52 inserted in the bypass passage 36 serves to satisfactorily prevent the backflow of the cooling water from the bypass passage 36. Accordingly, the engine 6 can be warmed up even more quickly, so that the cooling water circuit 8 and the Rankine cycle circuit 4 can be made to function more properly.

A sixth embodiment will be now described.

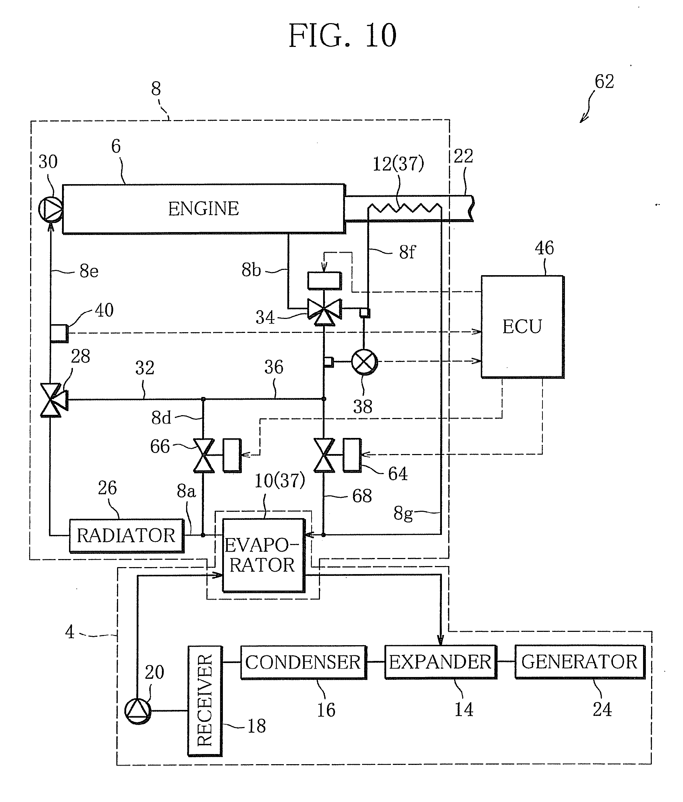

As shown in FIG. 10, a waste heat utilization device 62 according to the sixth embodiment uses the three-way valve 34 as the manipulating unit, like the fourth embodiment. The sixth embodiment differs from the fourth embodiment in that it additionally uses solenoid valves (second manipulating unit) 64 and 66 as a manipulating unit and additionally has a bypass passage (second bypass passage) 68 bypassing the evaporator 10 only.

Each of the solenoid valves 64 and 66 is a two-way solenoid valve with one inlet port and one outlet port and has a driving section electrically connected to the ECU 46. In accordance with an on-off contact signal input to the driving section, each solenoid valve drives its valve element to selectively permit or block the inflow of the cooling water.

The solenoid valve 64 is inserted in the bypass passage 68. The bypass passage 68 branches off from a passage 8g of the cooling water circuit 8 extending from the exhaust gas heat exchanger 12 to the evaporator 10, and therefore, the cooling water can be made to flow into the bypass passage 36 while bypassing only the evaporator 10. On the other hand, the solenoid valve 66 is inserted in the shared passage 8d of the bypass passages 32 and 36.

Also, in the sixth embodiment, temperature-based valve opening control and differential pressure-based valve opening control similar to those of the fourth embodiment are executed, but in the sixth embodiment, the solenoid valves 64 and 66 are also driven in addition to the three-way valve 34.

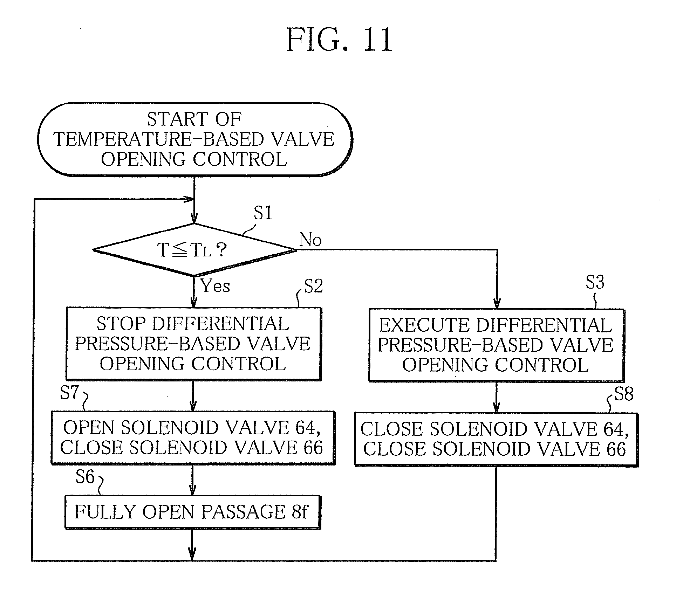

Referring now to the flowchart of FIG. 11, there is illustrated the temperature-based valve opening control executed in this embodiment. As illustrated, when the differential pressure-based valve opening control is terminated in S2, the control routine proceeds to S7, in which the solenoid valve 64 is opened while the solenoid valve 66 is closed. Then, in S6, the three-way valve 34 is driven such that the passage 8f is fully opened.

On the other hand, when the differential pressure-based valve opening control is executed in S3, the control routine proceeds to S8, wherein the solenoid valves 64 and 66 are both closed (flow rate proportioning control means).

Thus, also in the sixth embodiment, the cooling performance of the radiator 26 can be maintained irrespective of change in the operating condition of the engine 6, and also the engine 6 can be quickly warmed up, like the fourth and fifth embodiments. Accordingly, both of the cooling water circuit 8 and the Rankine cycle circuit 4 can be made to function properly and reliably.

Especially, in the sixth embodiment, the solenoid valves 64 and 66 are opened and closed, respectively, when the engine 6 is warmed up. Accordingly, the cooling water passed through the exhaust gas heat exchanger 12 can be introduced into the bypass passage 68 bypassing the evaporator 10. Thus, it is possible to prevent the evaporator 10 from absorbing heat from the cooling water, without the need to stop the pump 20, that is, without the need to stop the function of the Rankine cycle circuit 4.

Also, since the cooling water is not passed through the evaporator 10 during the warm-up of the engine 6, the number of pressure loss elements that induce pressure loss within the whole cooling water circuit 8 can be reduced. Accordingly, circulation of the cooling water through the cooling water circuit 8 is further facilitated during the warm-up of the engine 6, and since the engine 6 can be warmed up even more quickly, the cooling water circuit 8 and the Rankine cycle circuit 4 can be made to function more properly.

A seventh embodiment will be now described.

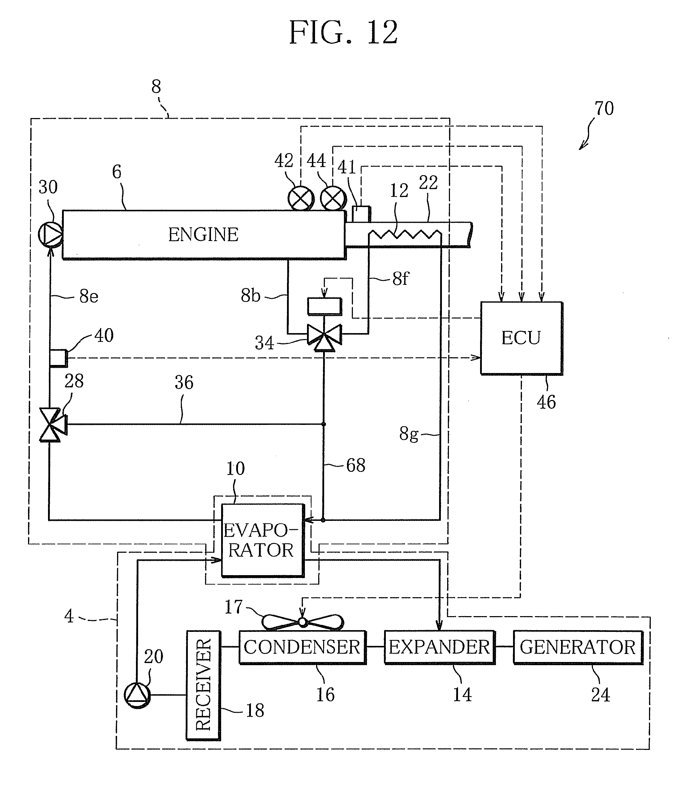

A waste heat utilization device 70 according to the seventh embodiment is configured as illustrated in FIG. 12. Specifically, compared with the cooling water circuit of the fourth embodiment, the radiator 26 and the differential pressure sensor 38 are omitted from the cooling water circuit 8, the bypass passage 36 is directly connected to one inlet port of the thermostat 28, and the bypass passage (exhaust gas heat exchanger bypass passage) 68 branches off from the bypass passage (evaporator bypass passage) 36. Further, in addition to the temperature sensors 42 and 44 mounted on the engine 6, an exhaust gas temperature sensor (sensing unit) 41 for detecting the temperature Tg of the exhaust gas discharged from the engine 6 is attached to the exhaust pipe 22.

Also, the condenser 16 is provided with an electric fan 17. The fan 17 is configured to operate when a temperature difference ΔT between outside air temperature To detected by an outside air temperature sensor, not shown, and the condensation temperature Tc peculiar to the refrigerant becomes larger than or equal to a preset temperature difference ΔTs.

In this embodiment, heat absorption control is executed, as a sub control routine, to drive the three-way valve 34 in accordance with the cooling water temperature T detected by the temperature sensor 40. This sub control routine is executed under the control of engine warm-up control as a main control routine, which executes and terminates the heat absorption control in accordance with the temperature Te of the body of the engine 6 detected by the temperature sensor 42. These control routines are executed by the ECU 46 (heat absorption control means).

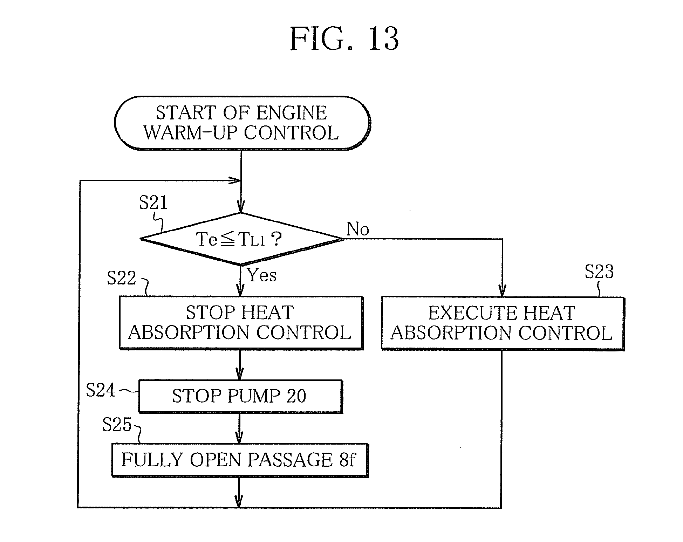

Referring now to the flowchart of FIG. 13, the engine warm-up control will be explained.

Upon start of the engine warm-up control, the control routine proceeds to S21.

In S21, it is determined whether or not the body temperature Te of the engine 6 detected by the temperature sensor 42 indicates a value lower than or equal to a preset temperature T_{L1}. If the result of the decision is affirmative (Yes), that is, if it is judged that the engine body temperature Te is lower than or equal to the preset temperature T_{L1}, the control routine proceeds to S22. On the other hand, if the result of the decision is negative (No), that is, if it is judged that the engine body temperature Te is higher than the preset temperature T_{L1}, the control routine proceeds to S23.

In S22, the heat absorption control is terminated if the control is under execution, and then the control routine proceeds to S24. If the heat absorption control is already terminated, the control routine proceeds to S24 with the heat absorption control kept terminated.

In S24, the pump 20 of the Rankine cycle circuit 4 is stopped, whereupon the control routine proceeds to S25.

In S25, the three-way valve 34 is forcibly driven so as to fully open the passage 8f and totally close the bypass passage 36.

In S23 which is executed following S21, the heat absorption control is started if the control is not executed. If the heat absorption control is already under execution, the control is continuously executed.

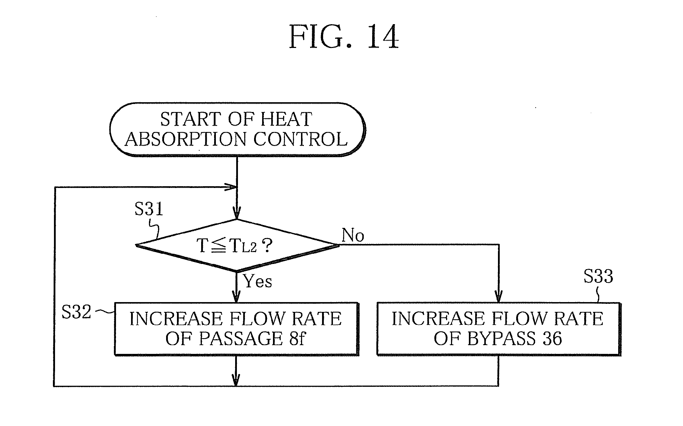

Referring now to the flowchart of FIG. 14, the heat absorption control executed in S23 will be explained.

Upon start of the heat absorption control, the pump 20 is operated, whereupon the control routine proceeds to S31.

In S31, it is determined whether or not the cooling water temperature T detected by the temperature sensor 40 indicates a value lower than or equal to a preset temperature T_{L2}. If the result of the decision is affirmative (Yes), that is, if the cooling water temperature T is judged to-be lower than or equal to the preset temperature T_{L2}, the control routine proceeds to S32. On the other hand, if the result of the decision is negative (No), that is, if the cooling water temperature T is judged to be higher than the preset temperature T_{L2}, the control routine proceeds to S33.

In S32, the three-way valve 34 is driven so as to increase the flow rate of the passage 8f and decrease the flow rate of the bypass passage 36.

In S33, on the other hand, the three-way valve 34 is driven so as to increase the flow rate of the bypass passage 36 and decrease the flow rate of the passage 8f.

In the above heat absorption control, the exhaust gas temperature sensor 41 may be used as the sensing unit in place of the temperature sensor 40, and a determination may be made in S31 as to whether or not the exhaust gas temperature Tg detected by the exhaust gas temperature sensor 41 indicates a value lower than or equal to a preset temperature (third preset temperature) T_{L3}. Preferably, the preset temperature (second preset temperature) T_{L2}, which is compared with the cooling water temperature T, is set so as to be higher at least than the preset temperature (preset temperature) Tt of the thermostat 28.

Thus, in the seventh embodiment, the heat absorption control is performed on the cooling water circulated through the cooling water circuit 8. Specifically, the operation of the three-way valve 34 is controlled to restrict the amount of heat that the cooling water absorbs from the exhaust gas in the exhaust gas heat exchanger 12, in accordance with the operating condition of the engine 6 so that the temperature T of the cooling water flowing into the engine 6 may become lower than or equal to the preset temperature T_{L2}.

In the Rankine cycle circuit 4, on the other hand, heat is absorbed from both the body of the engine 6 and the exhaust gas discharged from the engine 6 by means of the evaporator 10 through the medium of the cooling water circulated through the cooling water circuit 8, to recover waste heat from the engine 6. In this case, by setting the amount of heat absorption from the exhaust gas to a very small value by the aforementioned heat absorption control, it is possible to cause the Rankine cycle circuit 4, that is, the evaporator 10, to absorb heat substantially only from the body of the engine 6, namely, from the high-temperature cooling water returned directly from the engine 6 after cooling the engine body.

Accordingly, the amount of heat that needs to be absorbed from the high-temperature cooling water heated by the engine 6 which is operating with the maximum output can be regarded as a maximum amount of heat absorption, and the heat capacity of the evaporator 10 and of the condenser 16 may be set on the basis of the maximum amount of heat absorption. Since the amount of heat absorbed from the exhaust gas need not be taken into account, the heat capacity of the evaporator 10 and of the condenser 16 can be reduced. Consequently, it is possible to reduce the size and weight of the Rankine cycle circuit 4 and thus of the waste heat utilization device while ensuring proper functioning of the cooling water circuit 8 and the Rankine cycle circuit 4.

Also, the heat absorption control is executed under the control of the engine warm-up control. Thus, when the body temperature Te of the engine 6 is lower than or equal to the preset temperature T_{L1} and the engine 6 needs to be warmed up, the heat absorption control is terminated, the pump 20 is stopped to cause the Rankine cycle circuit 4 to cease functioning, and the three-way valve 34 is driven so that the passage 8f may be fully opened. Accordingly, during the warm-up of the engine 6, the cooling water circulated through the cooling water circuit 8 can be positively heated by the heat of the exhaust gas while at the same time excessive absorption of heat by the Rankine cycle circuit 4 is prevented, whereby the engine 6 can be quickly warmed up.

Further, since the preset cooling water temperature T_{L2}, which serves as the drive condition for driving the three-way valve 34, is set so as to be higher than the preset temperature Tt of the thermostat 28, interference between the heat absorption control and the control by the thermostat 28 is avoided, thereby permitting reliable functioning of the heat absorption control and the engine warm-up control.

The use of the exhaust gas temperature sensor 41 as the sensing unit, in place of the cooling water temperature sensor 40, is preferred from the point of view of the heat absorption control which is executed so that the maximum amount of heat to be absorbed from the cooling water flowing into the evaporator 10 may not exceed the heat capacity of the evaporator 10, because the responsiveness of the heat absorption control can be improved, compared with the case where the temperature sensor 40 is used as the sensing unit.

When the engine 6 operates with the maximum output, the total flow rate Ft of the cooling water increases, and as the total flow rate Ft thus increases, the exhaust gas heat exchanger 12 comes to act as a pressure loss element within the cooling water circuit 8. As a result, the resistance to the flow of the cooling water increases, hindering the circulation of the cooling water through the cooling water circuit 8 and lowering the engine cooling performance.

According to this embodiment, the flow rate proportioning control is executed in such a manner that when the engine 6 is operating with the maximum output, the cooling water is circulated so as to bypass the exhaust gas heat exchanger 12, whereby the flow rate Fhe of the cooling water distributed to the exhaust gas heat exchanger can be restricted to a certain low fixed rate or below. It is therefore possible to prevent the circulation of the cooling water through the cooling water circuit 8 from being hindered by the resistance of the exhaust gas heat exchanger 12 to the flow of the cooling water, thus providing the advantage that the engine cooling performance can be maintained. If the cooling water remains stagnant in the exhaust gas heat exchanger 12, however, the stagnant cooling water is heated to a boiling point by the exhaust gas, exerting an adverse influence on the whole cooling water circuit 8. It is therefore preferable that the flow rate Fhe of the cooling water distributed to the exhaust gas heat exchanger should be reduced not to zero but to a certain appropriate rate.

The fan 17 associated with the condenser 16 is driven when the condition is fulfilled that the temperature difference ΔT between the outside air temperature To and the condensation temperature Tc peculiar to the working fluid is larger than or equal to the preset temperature difference ΔTs. Accordingly, if ΔT becomes smaller than ΔTs due to increase in the vehicle speed, the fan 17 is stopped. It is therefore possible to reduce the electric power required to drive the fan 17, making the waste heat utilization device 70 energy-saving.

An eighth embodiment will be now described.

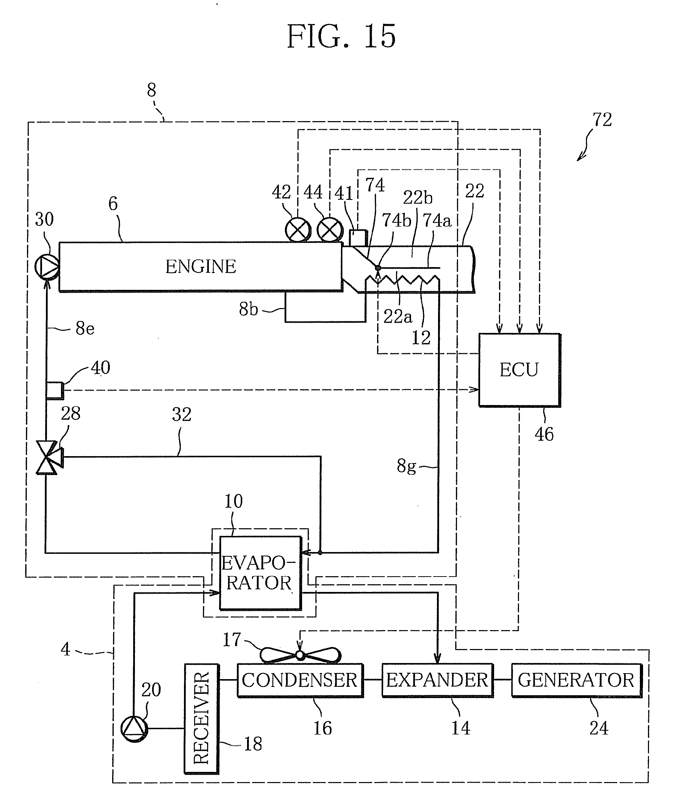

A waste heat utilization device 72 according to the eighth embodiment is configured as illustrated in FIG. 15. Specifically, compared with the seventh embodiment, a linear damper (manipulating unit) 74 is used as the manipulating unit, in place of the linear three-way valve 34, and the bypass passage 36 is removed. In the other respects, the configuration of the eighth embodiment is identical with that of the seventh embodiment.

The damper 74 is arranged inside the exhaust pipe 22 and connected through a driving section 74b to a partition wall 74a which partitions the interior of the exhaust pipe 22 into a passage (exchanger-side passage) 22a in which the exhaust gas heat exchanger 12 is arranged and a bypass passage (exchanger-bypassing passage) 22b which bypasses the exhaust gas heat exchanger 12.

The driving section 74b is electrically connected to the ECU 46 such that the damper 74 is driven in a continuously variable manner in proportion to an input signal supplied to the driving section 74b, so as to be able to finely adjust the amount of the exhaust gas that contacts with a tube serving as the cooling water path of the exhaust gas heat exchanger 12. Thus, the damper functions as a manipulating unit for heat absorption control (exhaust gas flow rate proportioning control).

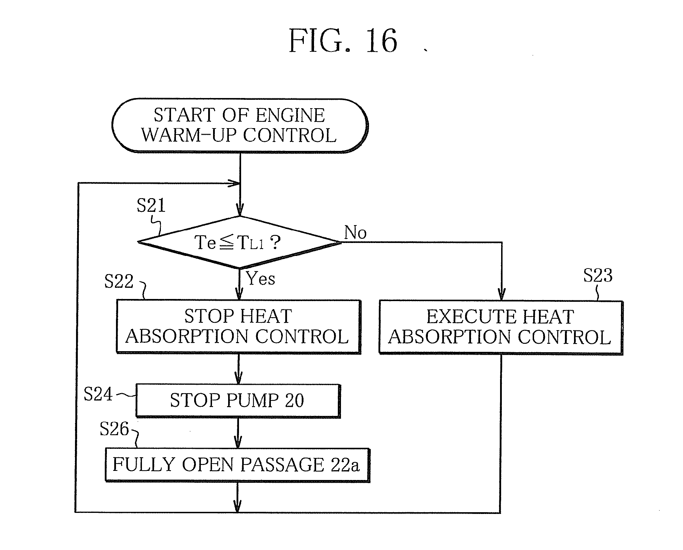

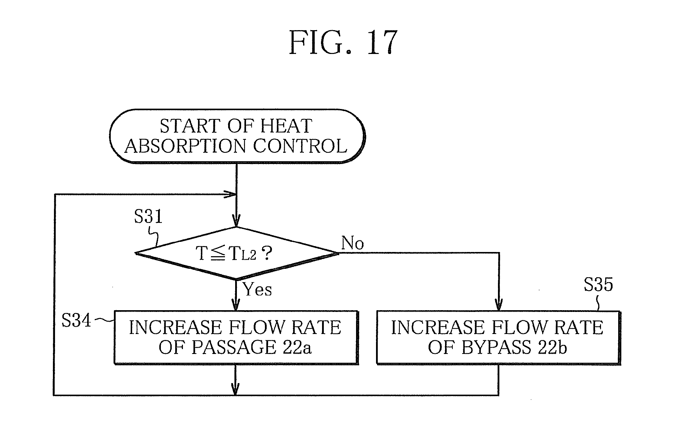

Referring now to the flowcharts of FIGS. 16 and 17, there are illustrated engine warm-up control and heat absorption control executed in this embodiment. When the heat absorption control is terminated in S22 of the engine warm-up control, the control routine proceeds to S24 and then to S26. In S26, the driving section 74b of the damper 74 is forcibly driven so as to maximize the flow rate of the passage 22a, namely, fully open the passage 22a, and completely close the bypass passage 22b.

In the heat absorption control, on the other hand, when the temperature T is judged to be lower than or equal to the preset temperature T_{L2} in S31, the control routine proceeds to S34, in which the damper 74 is driven so as to increase the opening area of the passage 22a and decrease the opening area of the bypass passage 22b.

If the result of the decision in S31 is negative (No), that is, if the temperature T is judged to be higher than the preset temperature T_{L2}, the control routine proceeds to S35. In S35, the damper 74 is driven so as to increase the opening area of the bypass passage 22b and decrease the opening area of the passage 22a.

In this manner, according to the eighth embodiment, the heat absorption control is executed by using the damper 74 as the manipulating unit. Accordingly, like the seventh embodiment, the amount of heat that needs to be absorbed from the cooling water heated by the engine 6 which is operating with the maximum output can be regarded as a maximum amount of heat absorption, and the heat capacity of the evaporator 10 and of the condenser 16 may be set on the basis of the maximum amount of heat absorption.

Also, the heat absorption control is executed under the control of the engine warm-up control, as in the seventh embodiment. Thus, the engine 6 can be quickly warmed up, and since interference between the heat absorption control and the control performed by the thermostat 28 is avoided, the heat absorption control can be made to function more reliably.

Especially, in the eighth embodiment, the absorption of heat from the exhaust gas can be directly controlled by executing the exhaust gas flow rate proportioning control. Accordingly, compared with the seventh embodiment in which the cooling water flow rate proportioning control is executed, the amount of heat absorbed into the cooling water can be accurately and promptly controlled so as to match the heat capacity of the evaporator 10 in the Rankine cycle circuit 4, making it possible to further improve the accuracy and responsiveness of the heat absorption control. Consequently, the Rankine cycle circuit 4 including the evaporator 10 and the condenser 16, and therefore, the waste heat utilization device 72 can be further reduced in size and weight while at the same time the cooling water circuit 8 and the Rankine cycle circuit 4 can be made to function more properly.

While the embodiments of the present invention have been described above, it is to be noted that the present invention is not limited to the foregoing embodiments alone and may be modified in various ways without departing from the scope of the invention.

For example, in the first to third embodiments, the temperature sensor 40 is used as a sensing unit. Some other sensor may be used insofar as it is capable of measuring the temperature of the cooling water circulated through the cooling water circuit 8, and the temperature sensor 42 attached to the engine 6 may be used instead for the purpose.

Also, in the first to third embodiments, the differential pressure sensor 38 and the flow sensor 56 are used as sensing units. If the flow rate Fe of the cooling water distributed to the evaporator 10 can be restricted to a certain fixed rate or below, the sensors 38 and 56 may be omitted. Specifically, the total flow rate Ft of cooling water may be calculated by the ECU 46 on the basis of the signal from the rotating speed sensor 44 mounted on the engine 6, and the three-way valve 34 may be controlled in accordance with the calculation result.

Further, in the fourth to sixth embodiments, the operation of the three-way valve 34 and the pump 50, which are manipulating units, is controlled in accordance with the detection signals from the differential pressure sensor 38 and the temperature sensor 40, to control the flow rate of the cooling water distributed to the heating unit 37. That is to say, the flow rate proportioning control, which is executed to quickly complete the warm-up of the engine 6 while maintaining the cooling performance of the radiator 26, can be regarded as controlling the amount of heat applied to the cooling water circulated through the cooling water circuit 8. Accordingly, the amount of heat transferred to the Rankine cycle circuit 4 may be calculated in advance by the ECU 46 on the basis of the cooling water temperature detected by the temperature sensor 40, and the operation of the above manipulating units may be controlled so that the calculated amount of heat may remain almost constant. Also in this case, it is possible to significantly improve the functioning of the cooling water circuit 8 and the Rankine cycle circuit 4. Alternatively, the flow rate of the cooling water flowing into the evaporator 10 via the exhaust gas heat exchanger 12 may be calculated by the ECU 46 on the basis of the differential pressure across the heating unit 37, detected by the differential pressure sensor 38, and the actual cooling water temperature may be multiplied by the cooling water flow rate to obtain the total amount of heat applied to the cooling water.

Furthermore, although in the sixth embodiment, the three-way valve 34 is used as a manipulating unit, the pump 50, which is used in the fifth embodiment as a manipulating unit, may be used instead. Also in this case, it is possible to speed up the warm-up of the engine 6 and also to cause the cooling water circuit 8 and the Rankine cycle circuit 4 to function properly.

In the seventh and eighth embodiments, moreover, the operation of the three-way valve 34 or the damper 74, which are manipulating units, is controlled in accordance with the outputs from sensing units including the cooling water temperature sensor 40 or the exhaust gas temperature senor 41, and the engine temperature sensor 42. Alternatively, the engine rotating speed sensor 44 may be used in place of the temperature sensors 40, 41 and 42. Generally, the ECU 46 is input with the signal from the rotating speed sensor 44. Thus, by using the input signal from the rotating speed sensor, it is possible to execute the heat absorption control by means of simplified configuration, eliminating the need for the temperature sensors 40, 41 and 42 and thereby reducing the cost of the waste heat utilization device 72.

The foregoing embodiments are explained with reference to the case where the flow rate proportioning control or the heat absorption control is executed for the waste heat utilization device mounted on a motor vehicle. The present invention is, however, equally applicable to various other types of internal combustion engine than the engine 6 and can also be applied to various heat medium circuits in which a heat medium applied with waste heat from an internal combustion engine or from a heat source of the engine is circulated as the engine is operated. Further, where the flow rate of at least one of a heat medium and a heat source that transfer heat to a refrigerant in a heating unit is controlled in accordance with the operating condition of the internal combustion engine, the flow rate proportioning control and the heat absorption control may be executed in combination.

## Claims

1. A waste heat utilization device for an internal combustion engine, comprising:
a heat medium circuit through which a heat medium applied with waste heat from at least one of the engine and a heat source of the engine is circulated as the engine is operated; and
a Rankine cycle circuit through which a working fluid is circulated, the Rankine cycle circuit including a heating unit for heating the working fluid by causing heat to transfer to the working fluid from at least one of the heat medium and the heat source, an expander for expanding the working fluid introduced therein from the heating unit to produce driving force, and a condenser for condensing the working fluid introduced therein from the expander, the working fluid being delivered from the condenser to the heating unit,
wherein a flow rate of at least one of the heat medium and the heat source that transfer heat to the working fluid in the heating unit is restricted in accordance with an operating condition of the engine.

2. The waste heat utilization device according to claim 1, wherein:
the heat medium is cooling water for cooling the engine, the heat medium circuit is a cooling water circuit which includes a radiator for cooling the cooling water and in which the cooling water is circulated successively through the engine, the heating unit and the radiator at a flow rate corresponding to the operating condition of the engine, and
the cooling water circuit further includes a bypass passage bypassing the heating unit, and flow rate proportioning control means for controlling distribution of the cooling water to the bypass passage and the heating unit, to restrict an amount of the cooling water flowing into the heating unit while maintaining circulation of the cooling water through the cooling water circuit.

3. The waste heat utilization device according to claim 2, wherein the flow rate proportioning control means includes a differential pressure sensor for detecting a differential pressure across the heating unit, and a manipulating unit which is driven so as to restrict the flow rate of the cooling water flowing into the heating unit in accordance with the differential pressure detected by the differential pressure sensor.

4. The waste heat utilization device according to claim 3, wherein:
the heating unit includes an evaporator connected in series with the radiator as viewed in a flowing direction of the cooling water, for heating the working fluid by causing heat to transfer to the working fluid from the cooling water introduced therein via the engine, and
the flow rate proportioning control means further includes a cooling water temperature sensor for detecting temperature of the cooling water circulated through the cooling water circuit, and drives the manipulating unit so as to cause the cooling water delivered from the engine to flow only into the bypass passage when the temperature of the cooling water detected by the cooling water temperature sensor is lower than or equal to a preset temperature.

5. The waste heat utilization device according to claim 4, wherein:
the heat source is an exhaust gas discharged from the engine through an exhaust pipe,
the heating unit includes an exhaust gas heat exchanger arranged in the exhaust pipe, and
the Rankine cycle circuit further includes a working fluid pump which is driven to circulate the working fluid.

6. The waste heat utilization device according to claim 5, wherein the flow rate proportioning control means further includes a cooling water temperature sensor for detecting temperature of the cooling water circulated through the cooling water circuit, and wherein, when the temperature of the cooling water detected by the cooling water temperature sensor is lower than or equal to a preset temperature, the flow rate proportioning control means stops operation of the working fluid pump and drives the manipulating unit so as to cause the cooling water delivered from the engine to flow into the exhaust gas heat exchanger.

7. The waste heat utilization device according to claim 5, wherein the flow rate proportioning control means further includes a second bypass passage bypassing only the evaporator, and a second manipulating unit arranged in the second bypass passage to restrict the flow rate of the cooling water flowing into the evaporator in accordance with the temperature of the cooling water detected by the cooling water temperature sensor, and wherein, when the temperature of the cooling water detected by the cooling water temperature sensor is lower than or equal to the preset temperature, the flow rate proportioning control means drives the first-mentioned manipulating unit and the second manipulating unit such that the cooling water delivered from the engine is introduced only into the exhaust gas heat exchanger.

8. The waste heat utilization device according to any one of claims 3 to 7, wherein the manipulating unit is a linear three-way valve whose operating position is continuously variable in accordance with the differential pressure detected by the differential pressure sensor.

9. The waste heat utilization device according to any one of claims 3 to 7, wherein the manipulating unit is a linear pump which is driven in a continuously variable manner in accordance with the differential pressure detected by the differential pressure sensor.

10. The waste heat utilization device according to claim 1, wherein:
the heat medium is cooling water for cooling the engine, the heat source is an exhaust gas discharged from the engine through an exhaust pipe,
the heating unit includes an exhaust gas heat exchanger arranged in the exhaust pipe for heating, by the exhaust gas, the cooling water delivered from the engine, and an evaporator for heating the working fluid by causing heat to transfer to the working fluid from the cooling water delivered from the exhaust gas heat exchanger,
the heat medium circuit is a cooling water circuit in which the cooling water is circulated successively through the engine, the exhaust gas heat exchanger and the evaporator at a flow rate corresponding to the operating condition of the engine, and
the cooling water circuit includes heat absorption control means for restricting an amount of heat absorption that the cooling water absorbs from the exhaust gas in the exhaust gas heat exchanger, in accordance with the operating condition of the engine.

11. The waste heat utilization device according to claim 10, wherein:
the heat absorption control means includes a sensing unit for detecting the operating condition of the engine, and a manipulating unit for restricting the amount of heat absorption in accordance with a detection signal from the sensing unit,
the Rankine cycle circuit further includes a working fluid pump which is driven to circulate the working fluid, and
when the operating condition of the engine detected by the sensing unit indicates that the engine needs to be warmed up, the heat absorption control means stops operation of the working fluid pump and also drives the manipulating unit so as to increase the amount of heat absorption.

12. The waste heat utilization device according to claim 11, wherein:
the cooling water circuit further includes an evaporator bypass passage bypassing the evaporator, and a thermostat arranged at a meeting point where the evaporator bypass passage joins a downstream side of the evaporator and causing the cooling water to pass through the evaporator when temperature of the cooling water at the meeting point is higher than or equal to a preset temperature,
the sensing unit is a cooling water temperature sensor for detecting temperature of the cooling water circulated through the cooling water circuit, and
when the temperature of the cooling water detected by the cooling water temperature sensor is higher than a second preset temperature which is higher than or equal to the preset temperature, the heat absorption control means drives the manipulating unit so as to decrease the amount of heat absorption.

13. The waste heat utilization device according to claim 11, wherein:
the sensing unit is an exhaust gas temperature sensor for detecting temperature of the exhaust gas, and
when the temperature of the exhaust gas detected by the exhaust gas temperature sensor is higher than a third preset temperature, the heat absorption control means drives the manipulating unit so as to decrease the amount of heat absorption.

14. The waste heat utilization device according to any one of claims 11 to 13, wherein:
the cooling water circuit further includes an exhaust gas heat exchanger bypass passage bypassing the exhaust gas heat exchanger, and
the manipulating unit is a linear three-way valve which is driven in a continuously variable manner in accordance with a signal from the sensing unit, the three-way valve controlling distribution of the cooling water introduced therein via the engine to the exhaust gas heat exchanger bypass passage and the exhaust gas heat exchanger, to restrict an amount of the cooling water flowing into the exhaust gas heat exchanger.

15. The waste heat utilization device according to any one of claims 11 to 13, wherein the manipulating unit is a linear damper which is driven in a continuously variable manner in accordance with a signal from the sensing unit, the damper controlling distribution of the exhaust gas to an exchanger-side passage in the exhaust pipe in which the exhaust gas heat exchanger is located and an exchanger-bypassing passage in the exhaust pipe which bypasses the exhaust gas heat exchanger, to restrict an amount of the exhaust gas from which heat is transferred to the cooling water in the exhaust gas heat exchanger.
